# EUROPEAN PATENT APPLICATION

(11) **EP 4 692 142 A1**
(43) Date of publication of application: **11.02.2026**
(21) Application number: 24890087.0
(22) Date of filing: 14.06.2024
(51) Int. Cl.: C08F 220/18, C09J 133/12

(54) **METHOD FOR PREPARING POLYMER, POLYMER AND USE, SEPARATOR, BATTERY, AND ELECTRICAL DEVICE**

(30) Priority: 13.11.2023 CN 202311510434
(71) Applicant: Contemporary Amperex Technology Co., Limited, Ningde, Fujian 352100 (CN)
(72) Inventor: KANG, Haiyang, Ningde, Fujian 352100 (CN); ZHENG, Yi, Ningde, Fujian 352100 (CN); SUN, Chengdong, Ningde, Fujian 352100 (CN); LI, Lei, Ningde, Fujian 352100 (CN); LIU, Xingsheng, Ningde, Fujian 352100 (CN)
(74) Representative: Kraus & Lederer PartGmbB
(86) International application number: PCT/CN2024/099309
(87) International publication number: WO 2025/102718

(57) **Abstract**

Provided are a method for preparing a polymer, a polymer and a use thereof, a separator, a battery, and an electrical device. The method for preparing a polymer includes: mixing a polymer monomer, an initiator, and an emulsifier to obtain a mixture, where the polymer monomer includes an acrylate monomer; the initiator includes at least one of a persulfate initiator, an acyl peroxide initiator, and an azo initiator; and the emulsifier includes an anionic emulsifier; allowing the mixture to undergo polymerization to obtain a polymer emulsion, where the viscosity of the polymer emulsion at 25°C is 100 mPa·s to 2,000 mPa·s, and the solid content of the polymer emulsion is 20% to 60%; and granulating the polymer emulsion to obtain the polymer.

## Description

### TECHNICAL FIELD

The present disclosure relates to the technical field of batteries, and specifically relates to a method for preparing a polymer, a polymer, a separator, a battery, and an electrical device.

### BACKGROUND

**In** recent years, batteries have been widely used in energy storage power supply systems such as water power stations, thermal power stations, wind power stations, and solar power stations, and in a plurality of fields such as electric tools, electric bicycles, electric motorcycles, electric vehicles, military equipment, and aerospace. A binder, serving as an inactive material in a battery, is used for binding components in a battery slurry and adjacent battery components together. Although the binder is very small in amount and cost proportion in a battery, it can effectively improve the battery performance. While satisfying the binding property, a binder further needs to be capable of withstanding swell and corrosion of an electrolyte solution, and withstanding electrochemical corrosion during a charging or discharging process. Therefore, there are few types of polymers that can be used as battery binders. Moreover, even polymers that satisfy requirements still have problems such as complex manufacturing processes, low yield, and limited application scenarios. Currently, polymers sand methods for preparing same still need to be improved.

It should be noted that the foregoing statement is merely intended to provide background information related to the present application, and does not necessarily constitute the prior art.

### SUMMARY

According to a first aspect of the present application, provided is a method for preparing a polymer, including: mixing a polymer monomer, an initiator, and an emulsifier to obtain a mixture, where the polymer monomer includes an acrylate monomer; the initiator includes at least one of a persulfate initiator, an acyl peroxide initiator, and an azo initiator; and the emulsifier includes an anionic emulsifier; allowing the mixture to undergo polymerization to obtain a polymer emulsion, where the viscosity of the polymer emulsion at 25°C is 100 mPa·s to 2,000 mPa·s, and the solid content of the polymer emulsion is 20% to 60%; and granulating the polymer emulsion to obtain the polymer. Therefore, a polymer material that has a medium particle size, is suitable for a cold pressing process, and can be used as a battery binder, can be prepared by a simple method.

In some embodiments, the mixing the polymer monomer, the initiator, and the emulsifier includes: mixing the emulsifier with water to obtain a premix; and allowing the premix to reach a first temperature, dropwise adding the polymer monomer and the initiator to the premix, and performing stirring to obtain the mixture. Therefore, the dispersion uniformity of a reaction system can be improved by premixing, thereby improving the reaction yield.

In some embodiments, a mass ratio of the polymer monomer to the initiator to the emulsifier in the mixture is 100:(0.2-1.2):(1-12). Therefore, the yield of the polymer can be improved.

In some embodiments, the first temperature is 25°C to 95°C. Therefore, the dispersion effect of the premix can be improved.

In some embodiments, the stirring satisfies at least one of the following conditions: the stirring time is 10 min to 360 min; and the stirring speed is 10 rpm to 100 rpm. Therefore, the uniformity of the premix can be further improved.

In some embodiments, the allowing the mixture to undergo polymerization includes: performing heat preservation on the mixture to obtain the polymer emulsion. Therefore, a polymer can be obtained by the polymerization of the emulsion.

In some embodiments, the heat preservation satisfies at least one of the following conditions: the heat preservation time is 10 min to 480 min; and the heat preservation temperature is 45°C to 95°C. Therefore, the reaction rate and the reaction yield of the polymerization can be improved.

In some embodiments, the granulation includes spray drying. Therefore, a solid material in the polymer emulsion can be dried into a powder by the spray drying.

In some embodiments, the spray drying includes at least one of centrifugal spray drying, pneumatic spray drying, and pressure spray drying. Therefore, the yield of the granulation and the dispersibility of the resulting particles can be improved.

In some embodiments, the centrifugal spray drying satisfies at least one of the following conditions: the inlet air temperature of the centrifugal spray drying is 60°C to 280°C; the outlet air temperature of the centrifugal spray drying is 40°C to 100°C; and the linear velocity of an atomizer of the centrifugal spray drying is 100 m/s to 500 m/s. Therefore, the yield of the granulation can be further improved, and the particle size of the polymer can be effectively controlled.

In some embodiments, the pneumatic spray drying includes at least one of two-fluid spray drying, three-fluid spray drying, and four-fluid spray drying. Therefore, polymer particles with smaller particle sizes and improved size uniformity can be obtained.

In some embodiments, the two-fluid spray drying satisfies at least one of the following conditions: the air pressure of the two-fluid spray drying is 0.1 MPa to 5 MPa; and the hydraulic pressure of the two-fluid spray drying is 0.1 MPa to 100 MPa. Therefore, the uniformity in the particle size of the polymer particles can be further improved.

In some embodiments, the three-fluid spray drying satisfies at least one of the following conditions: the first air pressure of the three-fluid spray drying is 0.1 MPa to 5 MPa; the second air pressure of the three-fluid spray drying is 0.1 MPa to 5 MPa; and the hydraulic pressure of the three-fluid spray drying is 0.05 MPa to 50 MPa. Therefore, the uniformity in the particle size of the polymer particles can be improved.

In some embodiments, the acrylate monomer includes at least one of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl acrylate, glycidyl methacrylate, trimethylolpropane triacrylate, and trimethylaminoethyl methacrylate. Therefore, a polymer with a lower glass transition temperature can be obtained.

In some embodiments, the polymer monomer further includes at least one of acrylic acid, methacrylic acid, butenoic acid, heptenoic acid, acrylamide, N-hydroxymethacrylamide and N-butoxymethacrylamide, acrylonitrile, and methacrylonitrile. Therefore, polymer of the polymer monomer can be promoted, and the binding property and ionic conductivity of the polymer can be improved.

In some embodiments, the anionic emulsifier includes at least one of sodium dodecyl sulfonate, sodium dodecylbenzene sulfonate, sodium dodecyl sulfate, sodium dodecylbenzene sulfate, sodium laurate, sodium stearate, and sodium palmate. Therefore, the polymerization can be performed in an emulsion system.

In some embodiments, the initiator satisfies at least one of the following conditions: the persulfate initiator includes at least one of potassium persulfate and ammonium persulfate; the acyl peroxide initiator includes at least one of benzoyl peroxide and di-n-octanoyl peroxide; and the azo initiator includes at least one of azobisisobutyronitrile and dimethyl azobisisobutyrate. Therefore, the polymerization of the monomer can be initiated by the initiator.

In some embodiments, the method for preparing a polymer further includes: drying the polymer. Therefore, the moisture content of the polymer can be reduced.

In some embodiments, the method for preparing a polymer further includes: pulverizing the polymer. Therefore, polymer particles having a small particle size and a uniform and narrow distribution of particle size can be obtained.

In some embodiments, the pulverizing includes at least one of jet milling, mechanical milling, sand milling, and ball milling. Therefore, polymer particles with a moderate particle size can be obtained.

In some embodiments, a grading linear velocity of the jet milling is 10 m/s to 80 m/s. Therefore, the pulverizing effect can be improved.

In some embodiments, a pulverizing part of the mechanical milling includes a rotor and a stator, and the pulverizing part satisfies at least one of the following conditions: (1) a gap exists between the rotor and the stator, and the width of the gap is 50 µm to 5,000 µm; (2) the rotor is of a tapered structure consisting of a plurality of sets of ceramic modules, the ceramic modules are tooth-shaped knife sets, and an angle between a side edge line and a bottom line of the rotor is 65° to 80°; and (3) the stator is in a tapered shape, an outer surface of the stator is embedded with a serrated ceramic lining, and an angle between a side edge line and a bottom line of the stator is 65° to 80°. Therefore, the pulverizing effect can be improved.

In some embodiments, a milling medium of the sand milling includes zirconia beads, and the particle size of the zirconia beads is 0.1 mm to 3 mm. Therefore, the pulverizing effect can be improved.

According to a second aspect of the present application, provided is a polymer, prepared by the aforementioned method. Therefore, the polymer has all features and advantages of the aforementioned method, and the descriptions thereof are omitted herein.

In some embodiments, the Dv50 particle size of the polymer is 2 µm to 50 µm. Therefore, the polymer is applicable to a plurality of application scenarios.

In some embodiments, the moisture content of a powder of the polymer is less than or equal to 3%. Therefore, the polymer is suitable for long-term storage and use.

In some embodiments, the glass transition temperature of the polymer is less than or equal to 45°C. Therefore, the polymer can exhibit a flowing state at a relatively low temperature.

According to a third aspect of the present application, provided is use of the polymer prepared by the aforementioned method as a binder. Therefore, the polymer has all features and advantages of the aforementioned polymer when used as a binder, and the descriptions thereof are omitted herein.

According to a fourth aspect of the present application, provided is a separator, including the aforementioned polymer. Therefore, the separator has all features and advantages of the aforementioned polymer, and the descriptions thereof are omitted herein.

According to a fifth aspect of the present application, provided is a battery, including the aforementioned separator. Therefore, the battery has all features and advantages of the aforementioned separator, and the descriptions thereof are omitted herein.

According to a sixth aspect of the present application, provided is an electrical device, including the aforementioned battery is provided. Therefore, the electrical device has all features and advantages of the aforementioned battery, and the descriptions thereof are omitted herein.

### BRIEF DESCRIPTION OF THE DRAWINGS

The foregoing and/or additional aspects and advantages of the present application will become apparent and comprehensible in the description of examples made with reference to the following accompanying drawings.
FIG. 1 is a schematic flowchart of a method for preparing a polymer according to an embodiment of the present application;
FIG. 2 is a schematic flowchart of a method for preparing a polymer according to another embodiment of the present application;
FIG. 3 is a schematic flowchart of a method for preparing a polymer according to another embodiment of the present application;
FIG. 4 is a schematic flowchart of a method for preparing a polymer according to another embodiment of the present application;
FIG. 5 is a schematic diagram of a battery cell according to an embodiment of the present application;
FIG. 6 is an exploded view of a battery cell according to an embodiment of the present application as shown in FIG. 5;
FIG. 7 is a schematic diagram of a battery module according to an embodiment of the present application;
FIG. 8 is a schematic diagram of a battery pack according to an embodiment of the present application;
FIG. 9 is an exploded view of the battery pack according to an embodiment of the present application as shown in FIG. 8; and
FIG. 10 is a schematic diagram of an electrical device using a battery according to an embodiment of the present application as a power source.

Description of reference numerals:
1. Battery pack; 2. Upper box body; 3. Lower box body; 4. Battery module 5. Battery cell;
51. Case; 52. Electrode assembly; and 53. Top cover assembly.

### DETAILED DESCRIPTION

Examples of the present application are described in detail below, and examples of the examples are shown in accompanying drawings, where the same or similar elements or the elements having the same or similar functions are denoted by the same or similar reference numerals throughout the description. The examples described below with reference to the accompanying drawings are exemplary and used only for explaining the present application, and should not be construed as a limitation to the present application.

Unless otherwise defined, the meanings of all technical and scientific terms used in the present application are the same as those usually understood by a person skilled in the art to which the present application belongs. The terms used in the present application are only intended to describe objectives of specific examples, but are not intended to limit the present application. Unless otherwise specified, numerical values of parameters mentioned in the present application may be measured by using various methods commonly used in the art (for example, measurement may be performed according to methods provided in the examples of the present application).

In the specification and claims of the present application, the terms "include", "have" and any other variants thereof are open-ended expressions, that is, include contents specified in the present application but do not exclude contents in other aspects.

A "range" disclosed in the present application is defined in the form of lower and upper limits, with a given range being defined by selecting a lower limit and an upper limit that define the boundaries of the particular range. A range defined in this way may include or exclude end values, and may be freely combined, that is, any lower limit can be combined with any upper limit to form a range. For example, if ranges 60-120 and 80-110 are listed for a particular parameter, it is to be understood that ranges 60-110 and 80-120 are also contemplated. In addition, if minimum range values 1 and 2 and maximum range values 3, 4, and 5 are listed, all of the following ranges can be expected: 1-3, 1-4, 1-5, 2-3, 2-4, and 2-5. In the present application, unless otherwise specified, a numerical range "a-b" is an abbreviated representation of any combinations of real numbers between a and b, where a and b are real numbers. For example, a numerical range "0-5" represents that all real numbers between 0 and 5 are listed herein, and "0-5" is merely an abbreviated representation of combinations of the real numbers. In addition, when a parameter is expressed as an integer ≥2, it is equivalent to disclosing that the parameter is, for example, an integer 2, 3, 4, 5, 6, 7, 8, 9, 10, 11, 12, or the like.

Unless otherwise specified, all embodiments and optional embodiments of the present application can be combined with each other to form new technical solutions.

Unless otherwise specified, all technical features and optional technical features of the present application can be combined with each other to form new technical solutions.

In the description of the present application, the terms "first" and "second" are used merely for the purpose of description, and shall not be construed as indicating or implying relative importance or implying the number of technical features indicated. A "first feature" or "second feature" may include one or more features.

In the description of the present application, "A and/or B" may include any of the following cases: a case of A alone, a case of B alone, or a case of both A and B, where A and B are merely used as examples, and may be any technical feature connected by "and/or" in the present application.

When the binding force between a positive electrode plate/negative electrode plate and a separator is insufficient, a gap is easily formed between the electrode plates and the separator of a battery, which significantly increases the internal resistance of the battery, and further decreases the cycle performance of the battery. The problem of poor contact between the separator and the electrode plates can be improved by providing the surface of the separator with a binder. Taking a polyvinylidene fluoride binder as an example, because the structures of the separator and the electrode plates have voids, when an electrode assembly is pressed by a hot pressing process, the binder may be in a relatively soft state and be deformed under a pressing force because the temperature of the hot pressing process is greater than the glass transition temperature of the binder. With the pressing force acting on the binder, a part of the structure of the binder can penetrate into the voids of the separator and the electrode plates, to bond the separator and the binder together, thereby achieving a mechanical interlocking effect and implementing a bonding function. However, the price of a fluorine-containing binder is relatively high, which may significantly increase costs of a battery. In addition, the polyvinylidene fluoride binder requires the hot pressing process to bond the separator and the electrode plates tightly, which may reduce the production efficiency of batteries and cause additional energy consumption, failing to satisfy requirements of battery production lines for faster production speed and lower energy consumption.

For faster production speed and lower energy consumption of the battery production lines, the hot pressing process is being gradually replaced by a cold pressing process, so as to improve a binding force between electrode plates and a separator by an original battery process. Specifically, the cold pressing process of battery electrode plates refers to a process in which a rolled cell is shaped, so that the elasticity of the cell is reduced, and a success rate of packaging and consistency in thickness of a finished cell are improved. Because an ambient temperature of a cold pressing process is relatively low, a binder having a relatively low glass transition temperature needs to be used to effectively bond electrode plates to a separator. Due to a relatively low glass transition temperature, acrylate polymers can be used as binders in a cold pressing process.

When polymerization of an emulsion is performed to synthesize a polymer material, granulation may be performed to obtain the polymer material in a particle form. In addition, because the particle size of a polymer in an emulsion-type acrylate polymer is 100 nm to 200 nm, if the emulsion-type acrylate polymer is directly applied to a separator, occasions such as hole blocking or insufficient binding force occur because the particle size of the polymer is excessively small. The granulation also helps to obtain a polymer having a relatively large particle size. When an acrylate polymer emulsion is granulated, particles usually become agglomerated due to a relatively strong intermolecular force of the acrylate polymer, and therefore, the granulation cannot be performed well.

In the present application, by optimizing the raw material ratio of an acrylate polymer and the viscosity and solid content of a polymer emulsion, primary particles in an acrylate polymer emulsion may be granulated to form secondary particles and spheres by a relatively simple process, so as to obtain acrylate particles having a medium particle size and relatively few agglomerations between the particles. When the acrylate polymer according to the present application is used as a binder on the surface of a separator, the affinity of the separator to an electrolyte solution is good, and the wettability of the electrolyte solution to the separator is good. Namely, the separator wetting length of the separator in the electrolyte solution is relatively long, which is more beneficial to transmission of metal active ions, and the internal resistance of a battery is relatively small. In addition, the separator is bonded to electrode plates more tightly, which can reduce polarization loss, prolong the cycle life of the battery, and improve the utilization of the battery.

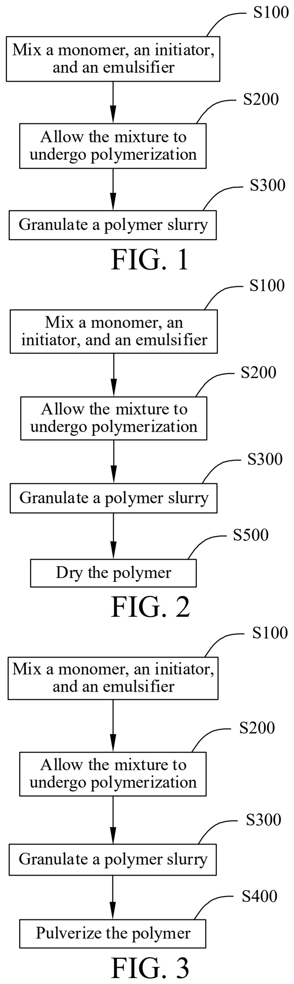

According to a first aspect of the present application, a method for preparing a polymer is provided. Therefore, a polymer material that has a medium particle size, is suitable for a cold pressing process, and can be used as a battery binder, can be prepared by a simple method. Referring to FIG. 1, the method includes the following steps:
S100: Mix a polymer monomer, an initiator, and an emulsifier

In some embodiments, a polymer monomer, an initiator, and an emulsifier are mixed to obtain a mixture in this step.

Emulsifiers are a type of materials that can convert immiscible oil and water into an emulsion that is difficult to stratify. Emulsifiers are typically surfactants that possess both properties of hydrophilic polar groups and hydrophobic (lipophilic) non-polar groups.

Initiators are materials that can initiate polymerization of monomers. For example, free-radical initiators refer to a type of compounds that easily thermally decomposes into free-radicals (i.e., primary free-radicals), and can be used for initiating free-radical polymerization and copolymerization of vinyl monomers and diene monomers.

In some embodiments, the mixing the polymer monomer, the initiator, and the emulsifier includes: mixing the emulsifier with water to obtain a premix; and allowing the premix to reach a first temperature, dropwise adding the polymer monomer and the initiator to the premix, and perform stirring to obtain the mixture.

An emulsion can be formed by mixing the emulsifier and the water. That is, the emulsifier forms micelles in the water phase. After the polymer is added, most of the micelles may solubilize the polymer monomer and the initiator, helping subsequent polymerization of the emulsion.

In some embodiments, the first temperature may be 25°C to 95°C.

As an example, the first temperature may be 25°C, 30°C, 35°C, 40°C, 45°C, 50°C, 55°C, 60°C, 65°C, 70°C, 75°C, 80°C, 85°C, 90°C, or 95°C.

The addition of the polymer monomer and the initiator at the first temperature helps the solubilization of the polymer monomer in the micelles, thereby improving the efficiency of the polymer reaction.

In some embodiments, the stirring may satisfy at least one of the following conditions: the stirring time may be 10 min to 360 min; and the stirring speed may be 10 rpm to 100 rpm.

In some embodiments, the polymer monomer may include an acrylate monomer. An ester group of the acrylate monomer can improve the anti-swell capability of the polymer, and can adjust the glass transition temperature of the polymer as a flexible monomer segment in a molecule segment, helping to adjust the glass transition temperature of the polymer within a suitable range.

In some embodiments, the acrylate monomer includes at least one of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl acrylate, glycidyl methacrylate, trimethylolpropane triacrylate, and trimethylaminoethyl methacrylate. Therefore, a polymer with a lower glass transition temperature can be obtained.

In some embodiments, the polymer may be: a polymer formed by polymerizing a type of monomer, e.g., an acrylate polymer; or a copolymer formed by polymerizing a plurality of types of monomers, e.g., an acrylate copolymer.

Polymerization involving two or more types of monomers is referred to as copolymerization, and a polymer formed thereby includes two or more types of monomer units. Such a polymer is referred to as a copolymer, or an interpolymer.

Acrylate copolymers are a collective name of polymers produced by copolymerization of an acrylate monomer with other copolymerization monomers. Acrylate copolymers have a good binding property. By using an acrylate copolymer, the binding property between a separator and an electrode plate is better after cold pressing is performed.

As an example, an acrylate copolymer may be formed by copolymerizing an acrylate monomer with an olefin monomer, for example, the copolymer may include an ethylene-methyl acrylate-glycidyl methacrylate ternary copolymer.

In some embodiments, the polymer monomer may further include at least one of acrylic acid, methacrylic acid, butenoic acid, heptenoic acid, acrylamide, N-hydroxymethacrylamide and N-butoxymethacrylamide, acrylonitrile, and methacrylonitrile.

An unsaturated carboxyl group in the polymer monomer helps the polymerization of the monomer, so that in a process of pressing a separator and an electrode plate by a cold pressing process, the carboxyl group can form a bonding force with functional groups on the materials of the electrode plate and the separator, thereby improving a binding effect.

An unsaturated amide group in the polymer monomer can regulate molecular weight and also has good binding property.

An unsaturated cyano group in the polymer monomer helps to improve the ionic conductivity and binding property of a polymer.

In some embodiments, the emulsifier may include an anionic emulsifier, where the anionic emulsifier may include at least one of sodium dodecyl sulfonate, sodium dodecylbenzene sulfonate, sodium dodecyl sulfate, sodium dodecylbenzene sulfate, sodium laurate, sodium stearate, and sodium palmate.

In some embodiments, the initiator may satisfy at least one of the following conditions: the persulfate initiator includes at least one of potassium persulfate and ammonium persulfate; the acyl peroxide initiator includes at least one of benzoyl peroxide and di-n-octanoyl peroxide; and the azo initiator includes at least one of azobisisobutyronitrile and dimethyl azobisisobutyrate.

In some embodiments, a mass ratio of the polymer monomer to the initiator to the emulsifier in the mixture is 100:(0.2-1.2):(1-12). Therefore, the yield of the polymer can be improved.

S200: Allow the mixture to undergo polymerization

In some embodiments, in this step, the mixture is heated to cause the initiator to initiate emulsion polymerization of the monomer in the micelles to obtain a polymer emulsion.

Emulsion polymerization refers to a process in which, with the help of an emulsifier and mechanical stirring, a monomer is dispersed in water to form an emulsion, and then, an initiator is added to initiate the polymerization of the monomer.

In some embodiments, the viscosity of the polymer emulsion may be 100 mPa·s to 2,000 mPa·s, and the solid content of the polymer emulsion may be 20% to 60%.

As an example, the viscosity of the polymer emulsion may be 100 mPa·s, 150 mPa·s, 200 mPa·s, 250 mPa·s, 300 mPa·s, 350 mPa·s, 400 mPa·s, 450 mPa·s, 500 mPa·s, 550 mPa·s, 600 mPa·s, 650 mPa·s, 700 mPa·s, 750 mPa·s, 800 mPa·s, 850 mPa·s, 900 mPa·s, 950 mPa·s, 1,000 mPa·s, 1,050 mPa·s, 1,100 mPa·s, 1,150 mPa·s, 1,200 mPa·s, 1,250 mPa·s, 1,300 mPa·s, 1,350 mPa·s, 1,400 mPa·s, 1,450 mPa·s, 1,500 mPa·s, 1,550 mPa·s, 1,600 mPa·s, 1,650 mPa·s, 1,700 mPa·s, 1,750 mPa·s, 1,800 mPa·s, 1,850 mPa·s, 1,900 mPa·s, 1,950 mPa·s, or 2,000 mPa·s.

As an example, the solid content of the polymer emulsion may be 20%, 25%, 30%, 35%, 40%, 45%, 50%, 55%, or 60%.

As an example, the viscosity of the polymer emulsion may be measured by using a rotational Brookfield viscometer, and specifically, may be measured by using a 62# rotor at 25°C.

When the viscosity and the solid content of the polymer emulsion are within the foregoing ranges, it is beneficial for spraying out of the polymer emulsion during granulation, so that the granulating effect can be improved. When the viscosity and the solid content of the polymer do not fall within the foregoing ranges, the polymer emulsion is difficult to spray out, which is unfavorable for the granulation.

In some embodiments, to satisfy the process requirements of subsequent granulation, such as spray drying, before the granulation, the viscosity of the polymer emulsion may be reduced, and/or the solid content of the polymer emulsion may be adjusted.

In some embodiments, the allowing the mixture to undergo polymerization includes: performing heat preservation on the mixture to obtain the polymer emulsion.

In some embodiments, the heat preservation satisfies at least one of the following conditions: the heat preservation time is 10 min to 480 min; and the heat preservation temperature is 45°C to 95°C. Therefore, the reaction rate and the reaction yield of the polymerization can be improved.

S300: Granulate the polymer emulsion

In some embodiments, when the polymerization of an emulsion is performed to synthesize a polymer material, the granulation needs to be performed to obtain the polymer material in a particle form, for example, to obtain a powder of the polymer material.

In some embodiments, the granulation may include spray drying.

Spray drying is a granulating process in which a polymer emulsion is sprayed and dried by heat. Specifically, spray drying includes three phases: atomizing of a polymer emulsion, contact of fog droplets with hot air, and gas-solid separation. The process condition of the spray drying needs to be correspondingly adjusted according to the viscosity and the solid content of the polymer emulsion. For example, suitable inlet air temperature, outlet air temperature, and spraying speed of a spraying apparatus need to be controlled during the spray drying, so that the polymer emulsion can be better atomized, and the efficiency of contact and mixing between the fog droplets and the hot air is improved, thereby improving the yield of the spray drying.

In some embodiments, the spray drying may include at least one of centrifugal spray drying, pneumatic spray drying, and pressure spray drying.

In some embodiments, the centrifugal spray drying may satisfy at least one of the following conditions: the inlet air temperature of the centrifugal spray drying is 60°C to 280°C; the outlet air temperature of the centrifugal spray drying is 40°C to 100°C; and the linear velocity of an atomizer of the centrifugal spray drying is 100 m/s to 500 m/s.

By centrifugal spray drying, a polymer emulsion is atomized into fine fog-like droplets by a centrifugal atomizer arranged at the top of a drying tower, and the fine fog-like droplets are sprayed into a hot air flow through the kinetic energy of the fog-like droplets. The moisture in the fog-like droplets is instantly gasified and vaporized, and evacuated from the drying tower by an evacuation system. A dry powder product falls to the bottom of the tower to obtain a powder of the polymer material.

When the inlet air temperature of the centrifugal spray drying is within the foregoing range, the solvent volatilizes leaving a moderate residue, and the dried polymer material is less prone to melting or decomposition caused by heat absorption from the solvent, which would otherwise cause product adhesion to a wall (the product cannot be collected) or becoming deteriorated. Also, it avoids excessive solvents, which would cause concentration and increased viscosity, leading to agglomeration or wall adhesion of the polymer emulsion, ultimately resulting in product agglomeration and reduced yield.

When the outlet air temperature of the centrifugal spray drying is within the foregoing range, the polymer material in a dry or semi-dry state is less likely to continue to absorb heat without the protection of the solvent, which would cause charring, melting, or decomposition of the polymer material, and will also not stick together into agglomerates or adhere to the bottom of a drying cavity due to remaining in a semi-dried state in a semi-dry state.

When the linear velocity of the atomizer is within the foregoing range, the amount of solvent that needs to be evaporated from the fog-like droplets is moderate, the amount of heat that needs to be adsorbed is moderate, making it is less prone to wall adhesion or agglomeration.

In some embodiments, the pneumatic spray drying may include at least one of two-fluid spray drying, three-fluid spray drying, and four-fluid spray drying.

In some embodiments, the two-fluid spray drying may satisfy at least one of the following conditions: the air pressure of the two-fluid spray drying is 0.1 MPa to 5 MPa; and the hydraulic pressure of the two-fluid spray drying is 0.1 MPa to 100 MPa. Therefore, the uniformity in the particle size of the polymer particles can be further improved.

The two-fluid spray drying refers to a process in which a polymer emulsion and air pass through a two-fluid nozzle, and the fluid is sprayed out by a high-speed air flow, to form fog-like or fog droplet-like liquid particles; the moisture in the liquid particles is instantly gasified and vaporized by a hot air flow in a drying tower, and evacuated from the drying tower by an exhaust and dust removal system; and a dry powder product falls to the bottom of the tower.

The working principle of the two-fluid spray drying may be divided into two parts: an air flow part and a liquid part. The air flow part refers to that an air flow is accelerated to a high speed by compressed air or other gas, and then the air flow is sprayed out through an outlet of a nozzle, and at the outlet of the nozzle, the air flow forms a high-speed air stream that sprays a polymer emulsion out. The liquid part refers to that the polymer emulsion is sprayed into the air stream through a liquid outlet of the nozzle, and in this process, the polymer emulsion is sheared into small particles, forming fog-like or fog droplet-like liquid particles.

In some embodiments, the three-fluid spray drying may satisfy at least one of the following conditions: the first air pressure of the three-fluid spray drying is 0.1 MPa to 5 MPa; the second air pressure of the three-fluid spray drying is 0.1 MPa to 5 MPa; and the hydraulic pressure of the three-fluid spray drying is 0.05 MPa to 50 MPa. Therefore, the uniformity in the particle size of the polymer particles can be improved.

In some embodiments, the principles of the three-fluid spray drying and the four-fluid spray drying are similar to that of the two-fluid spray drying, and are different only in the configuration of a nozzle. That is, an air flow and a liquid are mixed at the outlet of a nozzle through different channels, enabling the polymer emulsion to form fog-like or fog droplet-like liquid drops.

Because an acrylate polymer emulsion has an inherent moisture-absorbing property, when the surface of a separator is coated with the acrylate polymer, the moisture in the polymer increases an internal resistance of a battery, decomposes and produces a gas during a charging/discharging cycle, and further causes many disadvantages such as bulging of the battery. Therefore, the moisture content of the polymer can be reduced by drying.

In some embodiments, referring to FIG. 2, the method for preparing a polymer may further include:
S500: Dry the polymer

In some embodiments, in this step, the moisture content of the polymer can be reduced by drying.

In some embodiments, a wet material, e.g., a polymer having a certain moisture content, may be frozen by a freezing step into a solid at a relatively low temperature, and then the moisture in the solid is directly sublimed under vacuum into a gaseous state without going through a liquid state. A pure cold-pressed separator binder has the characteristics such as a relatively low glass transition temperature Tg and easy water absorption. To further reduce the moisture content of the binder and facilitate mechanical pulverizing and granulating, in this solution, the spray-dried binder is further freeze-dried by a freezing process, and the temperature, degree of vacuum, and the time of freezing are controlled to further exclude bound water and unbound water. In addition, a reduction in the moisture content may also reduce the stickiness of the solid binder.

In some embodiments, the drying includes freeze drying, and the freeze drying satisfies at least one of the following conditions: the freeze drying temperature may be -1°C to -80°C; the freeze drying time may be 2 h to 50 h; and the vacuum degree of the freeze drying may be 2 Pa to 45 Pa.

After an acrylate polymer emulsion is granulated, the resulting polymer material may still have agglomeration, caking, and the like. When the requirement for the particle size of the polymer material is high, the caking and agglomeration of the polymer can be alleviated by pulverizing, thereby improving the uniformity in the particle size of the polymer material.

In some embodiments, referring to FIG. 3, the method for preparing a polymer may further include:
S400: Pulverize the polymer

In some embodiments, in this step, polymer particles having a small particle size and a uniform and narrow particle size distribution can be obtained.

In some embodiments, the pulverizing may include at least one of jet milling, mechanical milling, sand milling, and ball milling.

In some embodiments, a grading linear velocity of the jet milling may be 10 m/s to 80 m/s.

Jet milling refers to a process in which after being cooled, filtered, and dried, the compressed air forms a supersonic air flow through a nozzle and is injected into a pulverizing room to fluidize a material, and in the pulverizing room, the accelerated materials converge at a meeting point of injected air flows from a plurality of nozzles, and cause severe collision, friction, and shearing to achieve ultra-fine pulverization of particles. Parameters such as the pulverization pressure, the gas consumption, and the feed particle size need to be controlled during air flow pulverization and granulation. Parameters such as the pulverization pressure and the gas consumption need to be controlled during air flow pulverization.

In some embodiments, a pulverizing part of the mechanical milling may consist of a rotor and a stator, and the pulverizing part satisfies at least one of the following conditions: a gap exists between the rotor and the stator, and the width of the gap is 50 µm to 5,000 µm; the rotor is of a tapered structure consisting of a plurality of sets of ceramic modules, the ceramic modules are tooth-shaped knife sets, and an angle between a side edge line and a bottom line of the rotor is 65° to 80°; and the stator is in a tapered shape, an outer surface of the stator is embedded with a serrated ceramic lining, and an angle between a side edge line and a bottom line of the stator is 65° to 80°.

The width of the gap between the rotor and the stator, namely, the spacing, can be changed by adjusting the number and thickness of pads.

The rotor may have a tapered structure consisting of three sets of ceramic modules. Specifically, the three sets of ceramic modules that form the rotor are all tooth-shaped knife sets, where the tooth-shaped knife set at the topmost layer may consist of 90 knives for coarse pulverization, and the tooth-shaped knife sets at the middle layer and the lowermost layer may consist of 120 knives for fine pulverization.

Mechanical milling refers to a process in which a rotating body (a rod, hammer, plate, or the like) that rotates at a supersonic speed around a horizontal or vertical axis is used to intensely impact a material, so that the material collides with a fixed body, or particles impact and collide with each other, thereby milling the material. Parameters such as the diameter of the rotor and the rotational speed of the rotor need to be controlled during mechanical milling.

In some embodiments, a milling medium of the sand milling may include zirconia beads, and the particle size of the zirconia beads may be 0.1 mm to 3 mm.

Sand milling refers to a process in which a solid-liquid phase mixed material that has been pre-dispersed and wetted by a mixer is fed into a barrel by a material pump; and the material and a milling medium in the barrel are mixed together by a disperser that rotates at a high speed, so that more intense collision, friction, and shearing actions are generated between solid particles in the material and the milling medium, to accelerate the fine milling of the particles and the dispersion of aggregates. The ground and dispersed material passes through a dynamic separator to separate the milling medium, and flows out from a material outlet pipe.

Ball milling refers to a process in which a material is gradually ground to a desired particle size through friction and wear between steel balls and the material in a milling furnace. A working process of a ball mill is typically divided into two stages: grinding and grading.

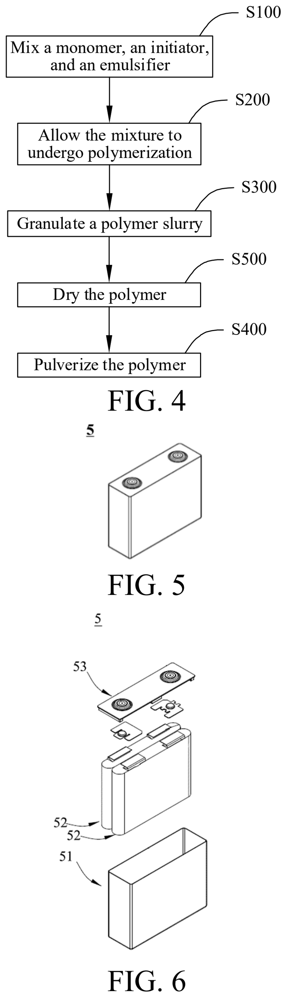

In some embodiments, referring to FIG. 4, the polymer can be frozen to below a glass transition temperature or brittleness temperature by freeze drying, and then pulverized.

Under a low temperature condition, the stiffness and brittleness of the polymer increase, and in a process of temperature decrease, uneven contraction of various positions in the polymer may be caused and generate internal stress. Under the stress, micro cracks are generated in weak parts in the polymer, and a bonding force of an internal structure is reduced. Therefore, the internal cracks may rapidly propagate and the polymer is shattered even under a relatively small external force.

As an example, during the pulverization, liquid nitrogen may be used as a cold source, and the temperature of the liquid nitrogen may be -196°C, so that adjustment can be made according to a brittleness point of the polymer. Ultra-low-temperature pulverization may be implemented and explosion, oxidation, and the like may be reduced by using liquid nitrogen as a medium.

A person skilled in the art may understand that in the foregoing specifically implemented method, the presented sequence of the steps does not mean a strict execution sequence, or further constitute any limitation on an embodiment process. A specific execution sequence of the steps should be determined according to functions and possible internal logic of the steps.

According to a second aspect of the present application, provided is a polymer, which is prepared by the aforementioned method. Therefore, the polymer has all features and advantages of the aforementioned method, and the descriptions thereof are omitted herein.

In some embodiments, the Dv50 particle size of the polymer may be 2 µm to 50 µm.

As an example, the Dv50 particle size of the polymer may be measured by using a laser particle size analyzer (MasterSizer 3000), and a helium-neon red light source is used as a main light source. Add 1 g of a to-be-tested sample to a clean small beaker, add a drop of surfactant, add 20 ml of deionized water, and sonicate the sample at 53 KHz/120 W for 5 min, to ensure that the sample is completely dispersed. Turn on the laser particle size analyzer, and automatically test a background after a light path system is cleaned. Mix the sonicated to-be-tested solution to evenly disperse the solution, and place the solution into a sample cell according to requirements to start the measurement of the particle size. The measurement result can be read from the instrument.

In some embodiments, the Dv50 particle size of the pulverized polymer may be 2 µm to 10 µm.

In some embodiments, the moisture content of a powder of the polymer is less than or equal to 3%.

As an example, for the moisture content of a powder of the polymer, reference may be made to: GB/T 2914-2008 Determination of volatiles (including water) of plastic/homopolymer and copolymer resin of vinyl chloride, method A/oven method, with a sample size of 5 g.

In some embodiments, the moisture content of a dried powder of the polymer may be less than or equal to 2%.

In some embodiments, the glass transition temperature of the polymer is less than or equal to 45°C.

In some embodiments, the glass transition temperature of the polymer may be less than or equal to 35°C. Therefore, the polymer can exhibit a flowing state at a relatively low temperature.

As an example, for the glass transition temperature of a polymer, reference may be made to the following: weigh 6±0.05 mg of a sample in an aluminum crucible, shake the sample flat, cover the crucible, and perform measurement by using a measurement instrument Netzsh DSC 3500 Sirius; nitrogen atmosphere, rate of a purging gas rate: 50 ml/min, and rate of a protective gas: 100 ml/min; heating condition: temperature rising rate: 10°C/min, and temperature range: -70°C to 200°C.

A glass transition temperature is defined as a temperature at which a high-polymer changes from a high-elastic state to a glass state, refers to a transition temperature of an amorphous polymer (including a non-crystalline part in a crystalline polymer) from a glass state to a high-elastic state or from the latter to the former. It is the minimum temperature at which a macromolecule segment of the amorphous polymer freely moves, and is usually represented by Tg. Above the glass transition temperature, a high polymer exhibits elasticity and particular flowability. Below the glass transition temperature, a high polymer exhibits brittleness. The glass transition temperature may be measured by using a method typically used in the art, for example, may be measured by differential scanning calorimetry with reference to GB/T19466.2.

According to a third aspect of the present application, provided is use of the polymer prepared by the aforementioned method as a binder. Therefore, the polymer has all features and advantages of the aforementioned polymer when used as a binder, and the descriptions thereof are omitted herein.

In some embodiments, the foregoing polymer may be used as a binder on the surface of a base film in the separator.

According to a fourth aspect of the present application, provided is a separator, including the aforementioned polymer. Therefore, the separator has all features and advantages of the aforementioned polymer, and the descriptions thereof are omitted herein.

In some embodiments, the separator includes a separator and a binding layer on at least one side of the base film, and the binding layer may include the foregoing polymer.

In some embodiments, when the foregoing polymer is used as a binder and applied to the surface of the base film, the polymer has no stickiness at a particular temperature, to facilitate winding and unwinding of the separator. However, when a cold pressing process is performed after the polymer is wound with a positive electrode plate and a negative electrode plate, the polymer has a good binding force, so that both the positive electrode plate and the negative electrode plate are tightly adhered to the separator. The binding property between the electrode plates and the binder can be improved by applying the foregoing binder to the base film of the separator, and an opening problem of a cell pre-cooling and pressing process can be improved, thereby improving the stiffness of an electrode assembly and the cycle performance of a battery.

The type of the separator is not particularly limited in the present application, and any porous structured separator having good chemical stability and mechanical stability can be used.

In some embodiments, the material of the separator includes at least one of glass fiber, non-woven fabric, polyethylene, polypropylene, and polyvinylidene fluoride. The separator may be a single-layer film or a multilayer composite film. When the separator is a multilayer composite film, the materials of the layers may be the same or different.

According to a fifth aspect of the present application, provided is a battery, including the aforementioned separator. Therefore, the battery has all features and advantages of the aforementioned separator, and the descriptions thereof are omitted herein.

Typically, a battery includes a positive electrode plate, a negative electrode plate, an electrolyte, and a separator. During a charging/discharging process of the battery, active ions undergo reversible intercalation and de-intercalation between the positive electrode plate and the negative electrode plate. The electrolyte plays a role in conducting the active ions between the positive electrode plate and the negative electrode plate. The separator is arranged between the positive electrode plate and the negative electrode plate, and mainly plays a role in preventing a short circuit between a positive electrode and a negative electrode of the battery while allowing the ions to pass through.

### [Positive electrode plate]

The positive electrode plate includes a positive electrode current collector and a positive electrode active material layer arranged on at least one surface of the positive electrode current collector.

As an example, the positive electrode current collector has two surfaces opposite to each other in a thickness direction of the positive electrode current collector, and the positive electrode active material layer is arranged on either or both of the two opposite surfaces of the positive electrode current collector.

In some embodiments, the positive electrode current collector may be metal foil or a composite current collector. For example, aluminum foil may be used as the metal foil. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (e.g., a substrate of polypropylene (PP), polyethylene terephthalate (PET), polybutylene terephthalate (PBT), polystyrene (PS), or polyethylene (PE)).

In some embodiments, when the battery is a lithium-ion battery, the positive electrode active material may be a known positive electrode active material for lithium-ion batteries in the art.

As an example, the positive electrode active material may include at least one of the following materials: a lithium-containing phosphate of an olivine structure and a lithium transition metal oxide, as well as modified compounds thereof. However, the present application is not limited to these materials, and may also use other conventional materials that may be used as a positive electrode active material for batteries. These positive electrode active materials may be used alone or in combination. An example of the lithium transition metal oxide may include, but is not limited to, at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also NCM₃₃₃ for short), LiNi_{0.5}Co_{0.2}Mn_{0.3}O₂ (also NCM₅₂₃ for short), LiNi_{0.5}Co_{0.25}Mn_{0.25}O₂ (also NCM₂₁₁ for short), LiNi_{0.6}Co_{0.2}Mn_{0.2}O₂ (also NCM₆₂₂ for short), LiNi_{0.8}Co_{0.1}Mn_{0.1}O₂ (also NCM₈₁₁ for short), lithium nickel cobalt aluminum oxide (e.g., LiNi_{0.85}Co_{0.15}Al_{0.05}O₂)), and modified compounds thereof. An example of the lithium-containing phosphate of an olivine structure may include, but is not limited to, at least one of lithium iron phosphate (e.g., LiFePO₄ (also LFP for short)), a composite material of lithium iron phosphate and carbon, lithium manganese phosphate (e.g., LiMnPO₄), a composite material of lithium manganese phosphate and carbon, lithium iron manganese phosphate, and a composite material of lithium manganese iron phosphate and carbon. The modified compounds of the foregoing materials may be those obtained by performing doping modification and/or surface coating modification on the materials.

A charging or discharging process of a battery is accompanied with de-intercalation and consumption of Li, and when the battery is discharged to different states, the molar content of Li varies. In the list of positive electrode active materials in the present application, the molar content of Li is a content in an initial state of the materials, i.e., a state before feeding. When the positive electrode active materials are applied to a battery system, the molar content of Li changes after a charging and discharging cycle.

In some embodiments, when the battery is a sodium-ion battery, the positive electrode active material may be a known positive electrode active material for sodium-ion batteries in the art.

As an example, the positive electrode active material may include at least one of the following materials: a sodium transition metal oxide, a polyanionic compound, and a Prussian blue sodium compound. However, the present application is not limited to these materials, and may also use other conventional materials that may be used as a positive electrode active material for batteries. The modified compounds of the foregoing materials may be those obtained by performing doping modification and/or surface coating modification on the materials.

In some embodiments, a transition metal in the sodium transition metal oxide may be at least one of Ti, V, Mn, Co, Ni, Fe, Zn, V, Zr, Ce, Cr, and Cu. The chemical formula of the sodium transition metal oxide may satisfy NaₓMO₂, where M includes at least one of Ti, V, Mn, Co, Ni, Fe, Zn, V, Zr, Ce, Cr, and Cu, and 0<x≤1.

In some embodiments, the polyanionic compound may be a type of compounds containing sodium ions, transition metal ions, and tetrahedral (YO₄)ⁿ⁻ anion units, where the transition metal may include at least one of Mn, Fe, Ni, Co, Cr, Cu, Ti, Zn, V, Zr, and Ce; Y may include at least one of P, S, and Si; and n represents the valence state of the (YO₄)ⁿ⁻.

In some embodiments, the polyanionic compound may also be a type of compounds containing sodium ions, transition metal ions, tetrahedral (YO₄)ⁿ⁻ anion units, and halogen anions. the transition metal may include at least one of Mn, Fe, Ni, Co, Cr, Cu, Ti, Zn, V, Zr, and Ce; Y may include at least one of P, S, and Si; n represents the valence state of the (YO₄)ⁿ⁻; and the halogen may include at least one of F, Cl, and Br.

In some embodiments, the polyanionic compound may also be a type of compounds containing sodium ions, tetrahedral (YO₄)ⁿ⁻ anion units, polyhedral units (ZO_{y})^{m+}, and optionally halogen anions, where M may include at least one of Mn, Fe, Ni, Co, Cr, Cu, Ti, Zn, V, Zr, and Ce; Y may include at least one of P, S, and Si; n represents the valence state of the (YO₄)ⁿ⁻; Z represents the transition metal; m represents the valence state of the (ZO_{y})^{m+}; and the halogen may include at least one of F, Cl, and Br.

As an example, the polyanionic compound may satisfy at least one of the chemical formulas: NaFePO₄, Na₃V₂(PO₄)₃ (sodium vanadium phosphate, NVP for short), Na₄Fe₃(PO₄)₂(P₂O₇), NaM'PO₄F (M' is at least one of V, Fe, Mn, and Ni), and Na₃(VO_{y})₂(PO₄)₂F_{3-2y} (0≤y≤1).

In some embodiments, the Prussian blue compound may be a type of compounds containing sodium ions, transition metal ions, and cyanide ions (CN⁻), where the transition metal may include at least one of Mn, Fe, Ni, Co, Cr, Cu, Ti, Zn, V, Zr, and Ce.

As an example, the Prussian blue compound may satisfy the chemical formula NaₐMe_{b}Me'_{c}(CN)₆, where Me and Me' includes at least one of Ni, Cu, Fe, Mn, Co, and Zn, respectively, 0<a≤2, 0<b<1, 0<c<1.

A charging or discharging process of a battery is accompanied with de-intercalation and consumption of Na, and when the battery is discharged to different states, the molar content of Na varies. In the list of positive electrode active materials in the present application, the molar content of Na is based on an initial state of the materials, i.e., a state before feeding. When the positive electrode active materials are applied to a battery system, the molar content of Na changes after a charging and discharging cycle.

In the list of the positive electrode active materials in the present application, the molar content of O is only a value in a theoretical state. Lattice oxygen release may cause changes in the molar content of O, resulting in fluctuations in the actual molar content of O.

In some embodiments, the positive electrode active material layer optionally further includes a binder.

As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode active material layer optionally further includes a conductive agent.

As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared by the following method: dispersing the foregoing components for preparing the positive electrode plate, e.g., the positive electrode active material, the conductive agent, the binder, and any other components, in a solvent (e.g., N-methylpyrrolidone) to form a positive electrode slurry; and coating a positive electrode current collector with the positive electrode slurry, followed by drying, cold pressing, and other procedures, to obtain the positive electrode plate.

### [Negative electrode plate]

The negative electrode plate includes a negative electrode current collector and a negative electrode active material layer arranged on at least one surface of the negative electrode current collector, and the negative electrode active material layer includes a negative electrode active material.

As an example, the negative electrode current collector has two surfaces opposite to each other in a thickness direction of the negative electrode current collector, and the negative electrode active material layer is arranged on either or both of the two opposite surfaces of the negative electrode current collector.

In some embodiments, the negative electrode current collector may be metal foil or a composite current collector. For example, copper foil may be used as the metal foil. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (e.g., a substrate such as polypropylene (PP), polyethylene terephthalate (PET), polybutylene terephthalate (PBT), polystyrene (PS), or polyethylene (PE)).

In some embodiments, the negative electrode active material may be a known negative electrode active material for batteries in the art. As an example, the negative electrode active material may include at least one of the following materials: artificial graphite, natural graphite, soft carbon, hard carbon, silicon-based material, tin-based material, lithium titanate, or the like. The silicon-based material includes at least one of elemental silicon, silicon oxide, silicon-carbon composite, silicon-nitrogen composite, and silicon alloy. The tin-based material includes at least one of elemental tin, tin oxide, and tin alloy. However, the present application is not limited to these materials, and may also use other conventional materials that can be used as a negative electrode active material for batteries. These negative electrode active materials may be used alone or in combination.

In some embodiments, the negative electrode active material layer optionally further includes a binder. The binder includes at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer optionally further includes a conductive agent. The conductive agent includes at least one of superconducting carbon, acetylene black, carbon black, Ketjen black, carbon dots, carbon nanotubes, graphene, and carbon nanofibers.

In some embodiments, the negative electrode active material layer optionally further includes other adjuvants, such as a thickener (e.g., sodium carboxymethyl cellulose (CMC-Na)).

In some embodiments, the negative electrode plate may be prepared by the following method: dispersing the foregoing components for preparing the negative electrode plate, e.g., the negative electrode active material, the conductive agent, the binder, and any other components, in a solvent (e.g., deionized water) to form a negative electrode slurry; and coating a negative electrode current collector with the negative electrode slurry, followed by drying, cold pressing, and other procedures, to obtain the negative electrode plate.

### [Electrolyte]

An electrolyte plays a role in conducting ions between a positive electrode plate and a negative electrode plate. The type of the electrolyte is not specifically limited in the present application, and may be used according to requirements. For example, the electrolyte may be liquid, gelled, or all solid.

In some embodiments, an electrolyte solution is used as the electrolyte. The electrolyte solution includes an electrolyte salt and a solvent.

In some embodiments, the electrolyte salt includes at least one of lithium hexafluorophosphate, lithium tetrafluoroborate, lithium perchlorate, lithium hexafluoroborate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent includes at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propanoate, methyl butyrate, ethyl butyrate, 1,4-butyrolactone, sulfolane, dimethyl sulfone, methyl ethyl sulfone, and diethyl sulfone.

In some embodiments, the electrolyte solution optionally further includes an additive. For example, the additive may include a negative electrode film forming additive and a positive electrode film forming additive, and may further include an additive that can improve particular performance of a battery, for example, an additive that improves the overcharging performance of the battery, and an additive that improves the high or low temperature performance of the battery.

In some embodiments, the positive electrode plate, the negative electrode plate, and the separator may be prepared into an electrode assembly by a winding process or a lamination process.

In some embodiments, the battery may include an outer package. The outer package may be used to encapsulate the electrode assembly and the electrolyte.

In some embodiments, the outer package of the battery may be a hard shell, e.g., a hard plastic shell, an aluminum shell, and a steel shell. The outer package of the battery also may be a soft package, e.g., a pouch-type soft package. The material of the soft package may be plastic, and examples of the plastic may include polypropylene, polybutylene terephthalate, and polybutylene succinate.

The present application has no particular limitation on the shape of the battery, which may be cylindrical, prismatic, or in any other shape. For example, FIG. 5 shows an exemplary prismatic battery cell 5.

In some embodiments, referring to FIG. 6, the outer package may include a case 51 and a top cover assembly 53. The case 51 may include a bottom plate and a side plate connected to the bottom plate, and an accommodating cavity is formed by the bottom plate and the side plate. An opening that communicates with the accommodating cavity is formed in the case 51, and the top cover assembly 53 can cover the opening to seal the accommodating cavity. The positive electrode plate, the negative electrode plate, and the separator may be wound or laminated to form an electrode assembly 52. The electrode assembly 52 is encapsulated in the accommodating cavity. An electrolyte solution infiltrates into the electrode assembly 52. The battery cell 5 may include one or more electrode assemblies 52, and the specific number can be selected by a person skilled in the art according to specific actual requirements.

In some embodiments, the battery may be assembled into a battery module. The battery module may include one or more batteries, and the exact number can be selected by a person skilled in the art according to the use and capacity of the battery module.

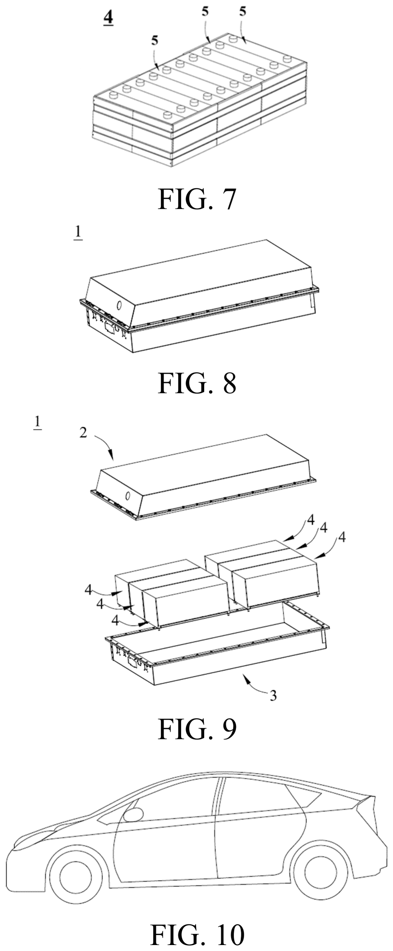

FIG. 7 shows a battery module 4 as an example. Referring to FIG. 7, in the battery module 4, a plurality of battery cells 5 may be sequentially arranged in the length direction of the battery module 4. Of course, the plurality of battery cells may also be arranged in any other manner. The plurality of battery cells 5 may further be fixed by fasteners.

Optionally, the battery module 4 may further include a casing with an accommodating space, and the plurality of battery cells 5 are accommodated in the accommodating space.

In some embodiments, the battery module may further be assembled into a battery pack. The battery pack may include one or more battery modules, and the specific number can be selected by a person skilled in the art according to the use and capacity of the battery pack.

FIG. 8 and FIG. 9 show a battery pack 1 as an example. Referring to FIG. 8 and FIG. 9, the battery pack 1 may include a battery box and a plurality of battery modules 4 arranged in the battery box. The battery box includes an upper box body 2 and a lower box body 3. The upper box body 2 can cover the lower box body 3 to form a closed space for accommodating the battery modules 4. The plurality of battery modules 4 may be arranged in the battery box in any manner.

According to a sixth aspect of the present application, provided is an electrical device, including the aforementioned battery. Therefore, the electrical device has all features and advantages of the aforementioned battery, and the descriptions thereof are omitted herein.

The battery, battery module, or battery pack may be used as a power source for the electrical device, and may also be used as an energy storage unit for the electrical device. The electrical device may include, but is not limited to, a mobile device (e.g., a mobile phone and a laptop), an electric vehicle (e.g., an all-electric vehicle, a hybrid electric vehicle, a plug-in hybrid electric vehicle, an electric bicycle, an electric scooter, an electric golf cart, and an electric truck), an electric train, a ship, a satellite, an energy storage system, and the like.

For the electrical device, the battery, battery module, or battery pack may be selected according to use requirements.

FIG. 10 shows an electrical device as an example. The electrical device is an all-electric vehicle, a hybrid electric vehicle, a plug-in hybrid electric vehicle, or the like. To meet the requirements of the electrical device for a high power and a high energy density of a battery, the battery packet or battery module may be used.

A device used as another example may be a mobile phone, a tablet computer, a laptop, or the like. The device is typically required to be light and thin, and can use a battery as a power source.

Examples of the present application will be described hereinafter. The examples described below are exemplary and only used to explain the present application, and should not be construed as a limitation on the present application. If no specific technologies or conditions are specified in the examples, technologies or conditions described in a literature in the art or a product manual shall be followed. The used reagents or instruments without manufacturers indicated are all conventional products that are available in the market.

### Example 1

### Emulsion synthesis

Monomers include: 65 wt% n-butyl acrylate, 5 wt% trimethylolpropane triacrylate, 2 wt% acrylic acid, 3 wt% 2-hydroxyethyl acrylate, 20 wt% acrylonitrile, and 5 wt% acrylamide; ammonium persulfate is used as an initiator; and sodium dodecyl sulfate is used as an emulsifier. The mass ratio of the monomers to the initiator to the emulsifier is 100:1:1.

Add all the emulsifier, 30% of the monomers (accounting for the total mass of the monomers), and 30% of the initiator (accounting for the total mass of the initiator) to a reaction kettle, add water, and perform stirring at a speed of 30 rpm. After 1 h of stirring at room temperature, increase the temperature to 60°C within 1 h. Maintain the stirring speed at 30 rpm, and add the remaining monomers and initiator into the reaction kettle at a constant speed within 3 h. Following the addition, maintain the temperature for 4 h, and adjust the pH to 5-8 to obtain a polymer emulsion. The viscosity of the polymer emulsion at 25°C is 1,500 mPa·s, the weight ratio of water to other components in the polymer emulsion is 50:50, and the solid content of the polymer emulsion is 50%.

### Centrifugal spray drying

Transfer the foregoing polymer emulsion to a centrifugal spray buffer stirring tank, and stir the polymer emulsion at a speed of 60 rpm for 2 h to complete the batching. Turn on a spray drier, and set the inlet air temperature to 200°C, the outlet air temperature to 80°C, and the rotating speed of an atomizer to 15,000 rpm (the diameter of an atomizing disk is 180 mm, and the corresponding linear velocity is 141 m/s). When the spray drier is stable, turn on a feed pump, and set the feed speed to 2,000 kg/h. After the slurry is dried by the centrifugal spray drier, a polymer power is obtained.

### Example 2

Example 2 is consistent with but different from Example 1 in delivering the polymer power in Example 1 to a bin of a jet mill, turning on the jet mill, adjusting the pulverizing air pressure to 5 bar, setting the linear velocity of a grading wheel to 38.6 m/S (the grading wheel has a diameter of 315 and a rotating speed of 3,000 pm), and collecting the material by using a dust collector, to obtain the pulverized polymer.

### Example 3

Example 3 is different from Example 1 in that monomers in Example 3 include: 40 wt% methyl methacrylate, 40 wt% lauryl methacrylate, 3 wt% acrylic acid, 2 wt% 2-hydroxyethyl acrylate, 5 wt% trimethylolpropane triacrylate, and 20 wt% acrylonitrile; and the viscosity of the polymer emulsion at 25°C is 100 mPa·s.

### Example 4

Example 4 is different from Example 1 in that monomers in Example 4 include: 60 wt% n-butyl acrylate, 5 wt% trimethylolpropane triacrylate, 2 wt% acrylic acid, 8 wt% 2-hydroxyethyl acrylate, and 25 wt% acrylonitrile; and the viscosity of the polymer emulsion at 25°C is 1,000 mPa·s.

### Example 5

Example 5 is different from Example 1 in that monomers in Example 5 include: 60 wt% n-butyl acrylate, 5 wt% trimethylolpropane triacrylate, 2 wt% acrylic acid, 8 wt% 2-hydroxyethyl acrylate, 15 wt% acrylonitrile, and 10 wt% acrylamide; and the viscosity of the polymer emulsion at 25°C is 2,000 mPa·s.

### Example 6

Example 6 is different from Example 1 in that, in Example 6, the weight ratio of water to other components in the polymer emulsion is 80:20, and the solid content of the polymer emulsion is 20%.

### Example 7

Example 7 is different from Example 1 in that, in Example 7, the weight ratio of water to other components in the polymer emulsion is 60:40, and the solid content of the polymer emulsion is 40%.

### Example 8

Example 8 is different from Example 1 in that, in Example 8, the weight ratio of water to other components in the polymer emulsion is 40:60, and the solid content of the polymer emulsion is 60%.

### Comparative Example 1

Comparative Example 1 is different from Example 1 in that, in Comparative Example 1, monomers include: 55 wt% ethyl acrylate, 5 wt% trimethylolpropane triacrylate, and 40 wt% acrylonitrile; and the viscosity of the polymer emulsion at 25°C is 80 mPa·s.

### Comparative Example 2

Comparative Example 2 is different from Example 1 in that, in Comparative Example 2, monomers include: 55 wt% ethyl acrylate, 5 wt% trimethylolpropane triacrylate, 20 wt% acrylonitrile, and 20 wt% acrylamide; and the viscosity of the polymer emulsion at 25°C is 2,100 mPa·s.

### Comparative Example 3

Comparative Example 3 is different from Example 1 in that, in Comparative Example 3, the ratio of water to other components is 82: 18, and the solid content of the polymer emulsion is 18%.

### Comparative Example 4

Comparative Example 2 is different from Example 1 in that, in Comparative Example 4, the ratio of water to other components is 39: 61, and the solid content of the polymer emulsion is 61%.

Arrange the polymers in Examples 1 to 8 and Comparative Examples 1 to 4 on separators and assemble batteries, specifically:

### Preparation of a separator

Use a commercial PE microporous film (from Zhuogao Electronic Technology Co., Ltd) having a thickness of 7 µm and an average pore diameter of 80 nm as a base film. Mix and stir a polymer prepared above in deionized water uniformly, to obtain a slurry (having a solid content of 20%). Spray the slurry on two surfaces of a substrate, and remove a solvent by drying, where the density of the coating composition on the substrate is 1.5 g/m², to obtain a separator.

### Preparation of positive electrode plate

Thoroughly mix and stir polyvinylidene fluoride (PVDF), lithium iron phosphate (LHP), carbon black as a conductive agent, and N-methylpyrrolidone (NMP) in a mass ratio of 1.2:58.38:0.42:40, to obtain a positive electrode slurry. Uniformly coat aluminum foil of a positive electrode current collector with the positive electrode slurry at a load of 200 g/m², followed by drying, cold pressing, and cutting to obtain a positive electrode plate.

### Preparation of negative electrode plate

Add and thoroughly mix and stir artificial graphite, acetylene black as a conductive agent, styrene-butadiene rubber (SBR) as a binder, and sodium carboxymethyl cellulose (CMC) as a thickener in a mass ratio of 96.2:1.0:1.6:1.2 to deionized water, to prepare a negative electrode slurry. Coat copper foil of a negative electrode current collector with the negative electrode slurry at a load of 98 g/m², followed by drying, cold pressing, and cutting to obtain a negative electrode plate.

### Preparation of electrolyte solution

At 25°C, mix ethylene carbonate (EC), methyl ethyl carbonate (EMC), and diethyl carbonate (DEC) in a volume ratio of 1:1:1 to obtain a mixed solvent. Then, dissolve LiPF₆ in the mixed solvent to obtain an electrolyte solution, where the concentration of the LiPF₆ is 1 mol/L.

### Preparation of battery

Sequentially stack, roll, and cold-press (during cold-pressing, the separator is bound to the electrode plates) the foregoing positive electrode plate, the separator, and the negative electrode plate, to obtain a cell. Put the cell into an outer package, and add the electrolyte solution prepared above, followed by packaging, standing, formation, aging, and other procedures, to obtain a secondary battery.

Test the polymers, separators, and batteries in Examples 1 to 8 and Comparative Examples 1 to 4 as follows, and the test results are shown in Table 1:

### Test methods:

1. Viscosity of polymer emulsion: Measure the viscosity of a polymer emulsion by using a rotational Brookfield viscometer, specifically by using a 62# rotor at 25°C.
2. Solid content of polymer emulsion: Measure the solid content by using a halogen moisture meter (Mettler HE 53), with a sample size of 1 g at 120°C.
3. Measurement of glass transition temperature Tg of polymer
   weigh 6+0.05 mg of a sample in an Al crucible, shake the sample flat, cover the crucible, and perform measurement by using a measurement instrument Netzsh DSC 3500 Sirius; nitrogen atmosphere, rate of a purging gas rate: 50 ml/min, and rate of a protective gas: 100 ml/min; heating condition: temperature rising rate: 10°C/min, and temperature range: - 70°C to 200°C.
4. Measurement of particle size of polymer

Use a laser particle size analyzer (MasterSizer 3000) for measurement, and use a helium-neon red light source as a main light source. Add 1 g of a to-be-tested sample to a clean small beaker, add a drop of surfactant, add 20 ml of deionized water, and sonicate the sample at 53 KHz/120 W for 5 min, to ensure that the sample is completely dispersed. Turn on the laser particle size analyzer, and automatically test a background after a light path system is cleaned. Mix the sonicated to-be-tested solution to evenly disperse the solution, and place the solution into a sample cell according to requirements to start the measurement of the particle size. The measurement result can be read from the instrument.

5. Moisture content of powder of polymer: Referring to GB/T 2914-2008 Determination of volatiles (including water) of plastic/homopolymer and copolymer resin of vinyl chloride, method A/oven method, with a sample size of 5 g.

### 6. Wetting length of separator:

Cut a separator into a sample having a width of 5 mm and a length of 100 mm, fix both ends of the sample, and place the sample horizontally. Dropwise add 0.5 mg of the electrolyte solution at the center of the sample, and after 1 min, take a picture and measure the length for which the electrolyte solution diffuses, thereby obtaining the wetting length of the separator. To ensure the accuracy of the measurement result, use 10 samples for measurement, and calculate an average value as the measurement result. The electrolyte solution may be prepared as follows: mix ethylene carbonate (EC), methyl ethyl carbonate (EMC), and diethyl carbonate (DEC) in a mass ratio of 30:50:20 to obtain an organic solvent, and dissolve thoroughly dried LiPF₆ in the organic solvent to obtain an electrolyte solution (1 mol/L).

7. Cycle performance of battery: Charge a prepared battery at a constant current of 1/3 C to 3. 65 V at 25°C; charge the battery at a constant voltage of 3.65 V to a current of 0.05 C; allow the battery to rest for 5 min; discharge the battery at 1/3 C to 2.0 V, and record the obtained discharge capacity as an initial capacity C₀; repeat the foregoing steps for the same battery, and record the discharge capacity Cₙ of the battery after the n^{th} cycle. Then, the battery capacity retention rate Pₙ=Cₙ/C₀×100% after each cycle, and represent the cycle performance with the battery capacity retention P₅₀₀ after the 500^{th} cycle.

**Table 1**

| No. | Polymer emulsion | | Polymer powder | | | Wetting length/mm | P₅₀₀/% |
|---|---|---|---|---|---|---|---|
| | Viscosity/(mPa·s) | Solid content/% | Tg/°C | Dv50/µm | Moisture content of powder/% | | |
| Example 1 | 1,500 | 50 | 35 | 35 | 1.5 | 16 | 90 |
| Example 2 | 1,500 | 50 | 35 | 10 | 1.8 | 22 | 95 |
| Example 3 | 100 | 50 | 45 | 20 | 1.5 | 20 | 92 |
| Example 4 | 1,000 | 50 | 40 | 25 | 1.6 | 18 | 91 |
| Example 5 | 2,000 | 50 | 35 | 35 | 2 | 16 | 91 |
| Example 6 | 150 | 20 | 35 | 18 | 2.2 | 18 | 92 |
| Example 7 | 500 | 40 | 35 | 20 | 1.8 | 17 | 90 |
| Example 8 | 1,800 | 60 | 35 | 40 | 1.4 | 16 | 92 |
| Comparative Example 1 | 80 | 50 | 25 | 19 | 1.5 | 15 | 85 |
| Comparative Example 2 | 2,100 | 50 | 30 | 41 | 2.1 | 13 | 83 |
| Comparative Example 3 | 50 | 18 | 35 | 15 | 3.5 | 15 | 82 |
| Comparative Example 4 | 2,300 | 61 | 35 | 46 | 2.3 | 15 | 85 |

From Table 1, in Comparative Example 1, the viscosity of a polymer emulsion is excessively low, the glass transition temperature of the obtained polymer is excessively low, the resistance to the electrolyte solution is poor, and the binding stability of a binding coating formed by the polymer on the surface of a base film is poor, resulting in poor cycle performance of a battery. In Comparative Example 2, the viscosity of a polymer emulsion is excessively high, the Dv50 diameter of the obtained polymer is excessively large, a binding coating formed by the polymer on the surface of a base film is excessively thick, and the wettability of a separator in an electrolyte solution is poor, resulting in poor cycle performance of a battery. In Comparative Example 3, the solid content of a polymer emulsion is excessively low, the energy consumption in production is increased, the moisture content of a power of the obtained polymer is excessively high, the polymer is prone to agglomeration, and the coating quality of a binding coating formed by the polymer on the surface of a base film is poor, resulting in poor binding stability of the binding coating and poor cycle performance of a battery. In Comparative Example 4, the solid content of a polymer emulsion is excessively high, the Dv50 diameter of the obtained polymer is excessively large, a binding coating formed by the polymer on the surface of a base film is excessively thick, and the wettability of a separator in an electrolyte solution is poor, resulting in poor cycle performance of a battery.

It should be noted that the present application is not limited to the embodiments above. The above embodiments are merely exemplary, and embodiments having substantially the same technical idea and the same effects within the scope of the technical solution of the present application are all included in the technical scope of the present application. In addition, other embodiments constructed by applying various modifications conceivable to a person skilled in the art to the embodiments and combining some of the constituent elements of the embodiments without departing from the scope of the essence of the present application are also included in the scope of the present application.

## Claims

1. A method for preparing a polymer, comprising:
mixing a polymer monomer, an initiator, and an emulsifier to obtain a mixture, wherein the polymer monomer comprises an acrylate monomer; the initiator comprises at least one of a persulfate initiator, an acyl peroxide initiator, and an azo initiator; and the emulsifier comprises an anionic emulsifier;
allowing the mixture to undergo polymerization to obtain a polymer emulsion, wherein the viscosity of the polymer emulsion at 25°C is 100 mPa·s to 2,000 mPa·s, and the solid content of the polymer emulsion is 20% to 60%; and
granulating the polymer emulsion to obtain the polymer.

2. The method according to claim 1, wherein the mixing the polymer monomer, the initiator, and the emulsifier comprises:
mixing the emulsifier with water to obtain a premix; and
allowing the premix to reach a first temperature, dropwise adding the polymer monomer and the initiator to the premix, and performing stirring to obtain the mixture; and
optionally, a mass ratio of the polymer monomer to the initiator to the emulsifier in the mixture is 100:(0.2-1.2):(1-12).

3. The method according to claim 2, wherein the first temperature is 25°C to 95°C.

4. The method according to claim 2 or 3, wherein the stirring satisfies at least one of the following conditions:
the stirring time is 10 min to 360 min; and
the stirring speed is 10 rpm to 100 rpm.

5. The method according to any one of claims 1 to 4, wherein the allowing the mixture to undergo polymerization comprises:
performing heat preservation on the mixture to obtain the polymer emulsion.

6. The method according to claim 5, wherein the heat preservation satisfies at least one of the following conditions:
the heat preservation time is 10 min to 480 min; and
the heat preservation temperature is 45°C to 95°C.

7. The method according to any one of claims 1 to 6, wherein the granulation comprises spray drying.

8. The method according to claim 7, wherein the spray drying comprises at least one of centrifugal spray drying, pneumatic spray drying, and pressure spray drying.

9. The method according to claim 8, wherein the centrifugal spray drying satisfies at least one of the following conditions:
the inlet air temperature of the centrifugal spray drying is 60°C to 280°C;
the outlet air temperature of the centrifugal spray drying is 40°C to 100°C; and
the linear velocity of an atomizer of the centrifugal spray drying is 100 m/s to 500 m/s.

10. The method according to claim 8, wherein the pneumatic spray drying comprises at least one of two-fluid spray drying, three-fluid spray drying, and four-fluid spray drying.

11. The method according to claim 10, wherein the two-fluid spray drying satisfies at least one of the following conditions:
the air pressure of the two-fluid spray drying is 0.1 MPa to 5 MPa; and
the hydraulic pressure of the two-fluid spray drying is 0.1 MPa to 100 MPa.

12. The method according to claim 10, wherein the three-fluid spray drying satisfies at least one of the following conditions:
the first air pressure of the three-fluid spray drying is 0.1 MPa to 5 MPa;
the second air pressure of the three-fluid spray drying is 0.1 MPa to 5 MPa; and
the hydraulic pressure of the three-fluid spray drying is 0.05 MPa to 50 MPa.

13. The method according to any one of claims 1 to 12, wherein the initiator satisfies at least one of the following conditions:
the persulfate initiator comprises at least one of potassium persulfate and ammonium persulfate;
the acyl peroxide initiator comprises at least one of benzoyl peroxide and di-n-octanoyl peroxide; and
the azo initiator comprises at least one of azobisisobutyronitrile and dimethyl azobisisobutyrate.

14. The method according to any one of claims 1 to 13, wherein the acrylate monomer comprises at least one of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl acrylate, glycidyl methacrylate, trimethylolpropane triacrylate, and trimethylaminoethyl methacrylate.

15. The method according to any one of claims 1 to 14, wherein the polymer monomer further comprises at least one of acrylic acid, methacrylic acid, butenoic acid, heptenoic acid, acrylamide, N-hydroxymethacrylamide and N-butoxymethacrylamide, acrylonitrile, and methacrylonitrile.

16. The method according to any one of claims 1 to 15, wherein the anionic emulsifier comprises at least one of sodium dodecyl sulfonate, sodium dodecylbenzene sulfonate, sodium dodecyl sulfate, sodium dodecylbenzene sulfate, sodium laurate, sodium stearate, and sodium palmate.

17. The method according to any one of claims 1 to 16, further comprising: drying the polymer.

18. The method according to any one of claims 1 to 17, further comprising: pulverizing the polymer.

19. The method according to claim 18, wherein the pulverizing comprises at least one of jet milling, mechanical milling, sand milling, and ball milling.

20. The method according to claim 19, wherein a grading linear velocity of the jet milling is 10 m/s to 80 m/s.

21. The method according to claim 19, wherein a pulverizing part of the mechanical milling comprises a rotor and a stator, and the pulverizing part satisfies at least one of the following conditions:
(1) a gap exists between the rotor and the stator, and the width of the gap is 50 µm to 5,000 µm;
(2) the rotor is of a tapered structure consisting of a plurality of sets of ceramic modules, the ceramic modules are tooth-shaped knife sets, and an angle between a side edge line and a bottom line of the rotor is 65° to 80°; and
(3) the stator is in a tapered shape, an outer surface of the stator is embedded with a serrated ceramic lining, and an angle between a side edge line and a bottom line of the stator is 65° to 80°.

22. The method according to claim 19, wherein a milling medium of the sand milling comprises zirconia beads, and the particle size of the zirconia beads is 0.1 mm to 3 mm.

23. A polymer, prepared by the method according to any one of claims 1 to 22.

24. The polymer according to claim 23, wherein the Dv50 particle size of the polymer is 2 µm to 50 µm.

25. The polymer according to claim 23 or 24, wherein the moisture content of a powder of the polymer is less than or equal to 3%.

26. The polymer according to any one of claims 23 to 25, wherein the glass transition temperature of the polymer is less than or equal to 45°C.

27. Use of the polymer prepared by the method according to any one of claims 1 to 22 as a binder.

28. A separator, comprising the polymer according to any one of claims 23 to 26.

29. A battery, comprising the separator according to claim 28.

30. An electrical device, comprising the battery according to claim 29.
